# EUROPÄISCHE PATENTSCHRIFT

(11) **EP 2 859 250 B1**
(45) Veröffentlichungstag und Bekanntmachung des Hinweises auf die Patenterteilung: **24.10.2018**
(21) Anmeldenummer: 13724263.2
(22) Anmeldetag: 22.05.2013
(51) Int. Cl.: F16F 9/04

(54) **ABROLLKOLBEN FÜR EINEN LUFTFEDERROLLBALG**
ROLLING PISTON FOR AN AIR SPRING ROLLING BELLOWS
PISTON DE ROULEMENT POUR SOUFFLET DÉROULANT DE SUSPENSION PNEUMATIQUE

(30) Priorität: 08.06.2012 DE 102012104964
(43) Veröffentlichungstag der Anmeldung: 15.04.2015
(73) Patentinhaber: ContiTech Luftfedersysteme GmbH, 30165 Hannover (DE)
(72) Erfinder: SZYSZKA, Axel, 30982 Pattensen (DE)
(74) Vertreter: Kilsch, Armin Ralph
(86) Internationale Anmeldenummer: PCT/EP2013/060439
(87) Internationale Veröffentlichungsnummer: WO 2013/182419

(56) Entgegenhaltungen:
- DE-A1- 4 115 028
- DE-A1-102008 055 511
- DE-B- 1 285 792
- US-A- 5 382 006

## Beschreibung

Die Erfindung betrifft einen Abrollkolben für einen Luftfederrollbalg, wobei der Abrollkolben mit einem zum Innenraum der Luftfeder sich verjüngenden Konus-Dichtsitz für eine luftdichte Aufnahme des dem Abrollkolben zugeordneten Ende des Luftfederrollbalgs versehen ist, wobei der Luftfederrollbalg an seinem dem Abrollkolben zugeordneten Ende mit einem Rollbalgwulst versehen ist, welcher einen Kern enthält und in seinem Querschnitt nach innen, d.h. zum Luftfederinnenraum hin, ebenfalls konusförmig ausgeformt ist und eine zum Dichtkonus des Rollbalge komplementär ausgebildete Öffnung ausbildet, die auf den Dichtkonus des Abrollkobens aufgepresst wird.

Im Stand der Technik sind verschiedene Arten solcher Abrollkolben bekannt, sowohl relativ schwere Abrollkolben aus Stahlblech, als auch Kolben aus Kunststoff. Abrollkolben aus Stahlblech werden als Tiefziehteil hergestellt, Abrollkolben aus Kunststoff in der Regel im Spritzgussverfahren. Beide Arten weisen in der Regel einen Konus-Dichtsitz, auch kurz Dichtkonus genannt, für die Aufnahme des unteren Rollbalgwulstes auf.

Der Rollbalgwulst ist üblicherweise mit einem Kern aus Draht oder anderen Festigkeitsträgern versehen. Der Querschnitt des Rollbalgwulstes ist innen, d.h. zum Luftfederinnenraum hin ebenfalls konusförmig ausgeformt und bildet damit eine zum Dichtkonus des Rollbalge komplementär ausgebildete Öffnung aus, die auf den Dichtkonus des Abrollkobens aufgepresst wird. Der Konus bzw. die Konusverbindung verjüngt sich dabei in Richtung des Luftfederinnenraums, so dass bei entsprechendem Innendruck in der Luftfeder der Rollbalg bei Belastung weiter auf den Dichtkonus "geschoben" wird, also in der Tendenz eine sich durch Innendruck selbst verstärkende Dichtung bereitstellt.

Derartige Luftfedern sind an sich bekannt und vorwiegend bei Nutzfahrzeugen, zunehmend aber auch bei Anhängern im Einsatz. Dabei ist die Belastung der Luftfeder meist eine Druckbelastung, so dass die Konus-Klemmsitz-Verbindung eine hohe Sicherheit bietet.

Beim Ausfedern jedoch, d.h. bei der Entlastung der Luftfeder, muss natürlich verhindert werden, dass der Luftfederrollbalg vom Dichtkonus des Kolbens abgezogen wird. Dies geschieht im Stand der Technik entweder durch Endanschläge in der Fahrwerkskonstruktion, also außerhalb der Luftfeder, durch Wegbegrenzungen mit Hilfe von Stoßdämpfern oder durch Rückhaltebänder, Ketten oder ähnliche Bauteile. Diese zusätzlichen "äußeren" Maßnahmen sind wartungsaufwendig und kostenträchtig.

Auch sind andere Sicherungen bekannt, z. B. die in der DE 1 285 792 B offenbarte Lösung, die darin besteht, dass durch aufgeschraubte Befestigungsscheiben dem Abziehen des Balges beim Ausfedern begegnet werden soll. Dieser Vorschlag bedingt jedoch eine etwas aufwendige Montage, falls mehrere Scheiben eingesetzt werden müssen. Anderenfalls ist die Konus-Klemmsitz-Verbindung nur an einer einzigen Stelle entsprechend gesichert, was bei Zugbelastung immer noch ein örtliches Lösen der Konus-Klemmsitz-Verbindung zulässt.

In der DE 4 115 028 A1 ist vorgeschlagen, den Konussitz mittels Gewindegang-Abschnitten zu verbessern. Durch die Gewindegang-Abschnitte wird der Abrollbalg zwar recht zuverlässig auch bei Zugbelastung fest auf dem Konus gehalten, jedoch muss der Abrollbalg bei der Montage gegen den Abrollkolben verdreht werden, was aufwendige Vorrichtungen erfordert. Außerdem können die Gewindegang-Abschnitte in das Elastomer des Abrollbalges einschneiden und so ein vorzeitiges Versagen des Abrollbalges auslösen.

Der Erfindung lag also die Aufgabe zu Grunde einen leichten und einfach herzustellenden Abrollkolbenkolben herzustellen, bei dem auf eine separate, durch andere Teile im Fahrwerk vorzuhaltende Sicherungen gegen Abziehen verzichtet werden und mit dem eine integrierte Sicherung ohne wesentliche Veränderung der Bauweise des Kolbens bereitgestellt werden kann.

Gelöst wird diese Aufgabe durch die Merkmale des Hauptanspruchs. Weitere vorteilhafte Ausbildungen sind in den Unteransprüchen offenbart.

Dabei ist der Konus-Dichtsitz auf der dem Luftfederinnenraum zugewandten Innenseite des Innenschenkels einer im Kopfbereich des Abrollkobens und zum Luftfederinnenraum geöffnet ausgebildeten und im Wesentlichen U-förmigen Vertiefung /Kavität angeordnet. Der Luftfederrollbalg mit seinem konusförmigen Querschnitt liegt dabei am Konus-Dichtsitz dichtend an. Gleichzeitig liegt der Luftfederrollbalg bzw. sein dem Abrollkolben zugeordnetes Ende mit seiner dem konusförmigen Querschnitt gegenüberliegenden Außenseite an der dem Luftfederinnenraum zugewandten Innenseite des Außenschenkels der Vertiefung an. Der Konus-Dichtsitz weist oberhalb der Anlagefläche des Luftfederrollbalgs eine umlaufende Nut auf, in der ein Spannring zur axialen Fixierung des Rollbalgwulstes eingelegt ist.

Durch diese erfindungsgemäße Ausbildung liegt der Luftfederrollbalg bzw. sein dem Abrollkolben zugeordnetes Ende - Querschnitt gesehen - an den drei Innenseiten der Vertiefung an und ist dort wie in einer Tasche eingesetzt und dichtend mit dem Abrollkolben verbunden, radial und axial abgestützt und fixiert, so dass ein Abziehen des Luftfederrollbalgs vom Dichtkonus des Kolbens ausgeschlossen ist.

Eine vorteilhafte Weiterbildung besteht darin, dass die zum Luftfederinnenraum geöffnet Vertiefung /Kavität trapezförmig ausgebildet ist. Eine solche einfache Formgebung erleichtert die Herstellbarkeit sowohl bei Abrollkolben aus Stahlblech als auch bei im Spritzgussverfahren hergestellten Abrollkolben aus Kunststoff.

Eine weitere vorteilhafte Ausbildung besteht darin, dass der Luftfederkolben mehrteilig ausgebildet ist und aus mindestens einem topfförmigen Unterteil und einem mit letzterem verbundenen Kolbendeckel besteht und bei dem die zum Luftfederinnenraum geöffnet ausgebildeten Vertiefung /Kavität innerhalb des Kolbendeckels ausgebildet ist. Damit gelangt nur ein leichtes und separat handhabbares Teil des Kolbens zur entsprechenden Bearbeitung, was ebenfalls die Fertigung erleichtert.

Eine weitere vorteilhafte Ausbildung besteht darin, dass der Kolben als dünnwandiger Hohlkolben ausgebildet ist und die zum Luftfederinnenraum geöffnet ausgebildeten Vertiefung /Kavität im Kolbendeckel eingezogen ist. Damit kann auch das Innenvolumen des Kolbens vollständig für die Federung genutzt werden und somit eine Anpassung auf unterschiedliche Federkennlinien erfolgen.

Eine besonders einfache und deswegen vorteilhafte weitere Ausbildung besteht darin, dass der Spannring ein an seinem Umfang geschlitzter Stahlring ist. Das reicht zur Fixierung in den meisten Fällen und ist in Form eines überaus kostengünstigen Bauteiles zu realisieren.

Anhand eines Ausführungsbeispieles soll die Erfindung näher erläutert werden. Es zeigen
- Fig. 1: Einen erfindungsgemäßen Abrollkolben
- Fig. 2: Eine Ausführung aus dem Stand der Technik zum Vergleich

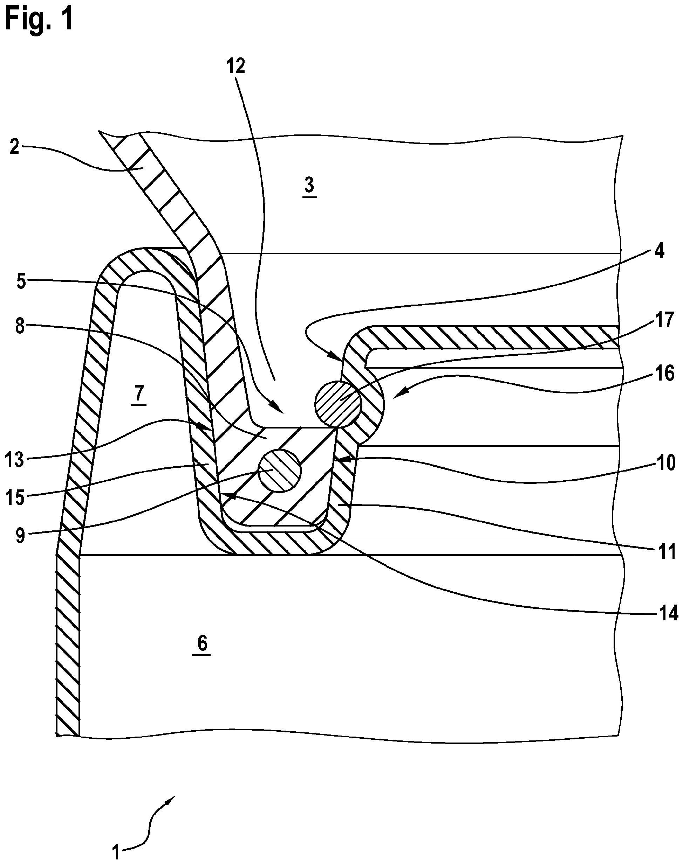

Die Fig. 1 zeigt einen zweiteiligen und als dünnwandigen hohlen Tauchkolben ausgebildeten erfindungsgemäßen Abrollkolben 1 für einen Luftfederrollbalg 2 eines LKW, der einen zum Innenraum 3 der Luftfeder sich verjüngenden Konus-Dichtsitz 4 für die luftdichte Aufnahme des dem Abrollkolben zugeordneten Ende 5 des Luftfederrollbalgs 2 versehen ist.

Der Abrollkolben 1 ist mehrteilig ausgebildet ist und besteht aus einem topfförmigen Unterteil 6 und einem mit letzterem verbundenen Kolbendeckel 7.

Der Luftfederrollbalg 2 ist an seinem dem Abrollkolben zugeordneten Ende 5 mit einem Rollbalgwulst 8 versehen, welcher einen Kern 9 enthält und in seinem Querschnitt nach innen, d.h. zum Luftfederinnenraum hin, ebenfalls konusförmig ausgeformt ist und eine zum Konus-Dichtsitz 4, kurz "Dichtkonus" des Rollbalge komplementär ausgebildete Öffnung ausbildet, die auf den Dichtkonus des Abrollkobens aufgepresst wird.

Der Konus-Dichtsitz 4 ist auf der dem Luftfederinnenraum zugewandten Innenseite 10 des Innenschenkels 11 einer im Kopfbereich, d.h. im Kolbendeckel 7 des Abrollkobens 1 und zum Luftfederinnenraum geöffnet ausgebildeten Vertiefung /Kavität 12 angeordnet, wobei der Luftfederrollbalg 2 mit seinem konusförmigen Querschnitt am Konus-Dichtsitz 4 dichtend anliegt. Die Vertiefung /Kavität 12 ist zum Luftfederinnenraum trapezförmig geöffnet ausgebildet.

Gleichzeitig liegt der Luftfederrollbalg 2 bzw. sein dem Abrollkolben zugeordnetes Ende 5 mit seiner dem konusförmigen Querschnitt gegenüberliegenden Außenseite 13 an der dem Luftfederinnenraum zugewandten Innenseite 14 des Außenschenkels 15 der Vertiefung an. Der Konus-Dichtsitz weist oberhalb der Anlagefläche des Luftfederrollbalgs eine umlaufende Nut 16 auf, in der ein an seinem Umfang geschlitzter Stahlring als Spannring 17 zur axialen Fixierung des Rollbalgwulstes eingelegt ist.

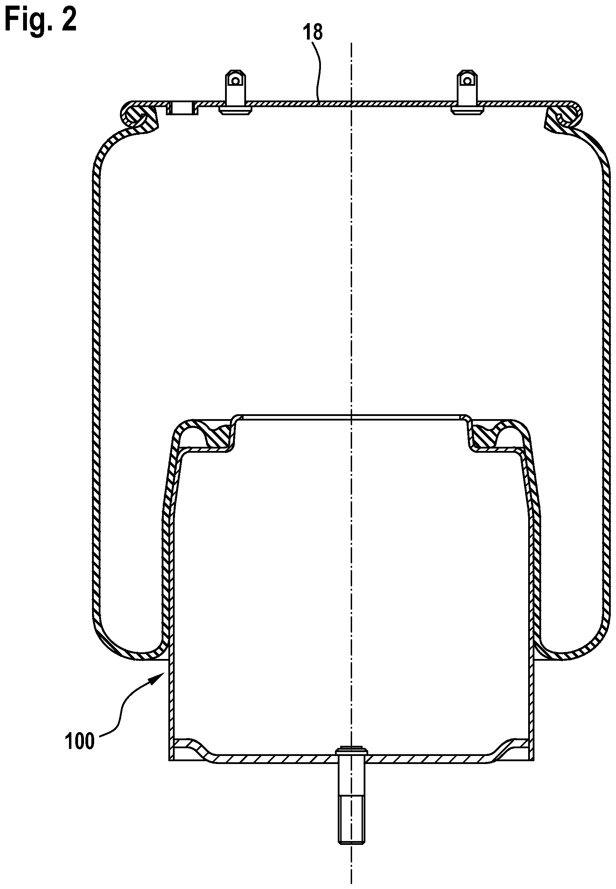

Fig. 2 zeigt im Vergleich hierzu eine Ausführung aus dem Stand der Technik, bei der der Rollbalgwulstes lediglich auf den Dichtkonus des Abrollkobens aufgepresst wird.

Dabei sind - wie auch bei der erfinderischen Lösung - der Luftfederdeckel 18 mit einer hier nicht näher dargestellten Karosserie und der Abrollkolben 100 über entsprechende Verbindungselenente mit einem zugehörigen Fahrwerksteil/Achsschemel des LKW verbunden.

### Bezugszeichenliste (Teil der Beschreibung)

- 1: Abrollkolben
- 2: Luftfederrollbalg
- 3: Innenraum der Luftfeder
- 4: Konus-Dichtsitz
- 5: dem Abrollkolben zugeordnetes Ende des Luftfederrollbalgs
- 6: Kolbenunterteil
- 7: Kolbendeckel
- 8: Rollbalgwulst
- 9: Kern
- 10: Innenseite des Innenschenkels
- 11: Innenschenkel
- 12: Vertiefung/Kavität
- 13: Außenseite des Luftfederrollbalges an seinem kolbenseitigen Ende
- 14: Innenseite des Außenschenkels der Vertiefung
- 15: Außenschenkels der Vertiefung
- 16: Umlaufende Nut
- 17: Geschlitzter Spannring
- 18: Luftfederdeckel
- 100: Abrollkolben aus dem Stand der Technik

## Patentansprüche

1. Abrollkolben (1) für einen Luftfederrollbalg (2), wobei der Abrollkolben mit einem zum Innenraum (3) der Luftfeder sich verjüngenden Konus-Dichtsitz (4) für eine luftdichte Aufnahme des dem Abrollkolben zugeordneten Ende (5) des Luftfederrollbalgs (2) versehen ist, wobei der Luftfederrollbalg (2) an seinem dem Abrollkolben zugeordneten Ende (5) mit einem Rollbalgwulst (8) versehen ist, welche einer Kern (7) enthält und in seinem Querschnitt nach innen, d.h. zum Luftfederinnenraum hin, ebenfalls konusförmig ausgeformt ist und eine zum Konus-Dichtsitz (4) des Rollbalge komplementär ausgebildete Öffnung ausbildet, die auf den Konus-Dichtsitz des Abrollkobens aufgepresst wird, **dadurch gekennzeichnet, dass** der Konus-Dichtsitz (4) auf der dem Luftfederinnenraum zugewandten Innenseite (10) des Innenschenkels (11) einer im Kopfbereich des Abrollkobens (1) und zum Luftfederinnenraum geöffnet ausgebildeten Vertiefung /Kavität (12) angeordnet ist, wobei der Luftfederrollbalg
- mit seinem konusförmigen Querschnitt am Konus-Dichtsitz (4) dichtend anliegt und
- mit seiner dem konusförmigen Querschnitt gegenüberliegenden Außenseite (13) an der dem Luftfederinnenraum zugewandten Innenseite (14) des Außenschenkels (15) der Vertiefung (12) anliegt und abgestützt ist,
und wobei der Konus-Dichtsitz (4) oberhalb der Anlagefläche des Luftfederrollbalgs eine umlaufend Nut (16) aufweist, in der ein Spannring (17) zur axialen Fixierung des Rollbalgwulstes eingelegt ist.

2. Abrollkolben nach Anspruch 1, bei dem die zum Luftfederinnenraum geöffnet Vertiefung /Kavität (12) trapezförmig ausgebildet ist.

3. Abrollkolben nach Anspruch 1 oder 2, bei dem der Luftfederkolben mehrteilig ausgebildet ist und aus mindestens einem topfförmigen Unterteil (6) und einem mit letzterem verbundenen Kolbendeckel (7) besteht und bei dem die zum Luftfederinnenraum geöffnet ausgebildeten Vertiefung /Kavität (12) innerhalb des Kolbendeckels (7) ausgebildet ist.

4. Abrollkolben nach einem der Ansprüche 1 bis 3, bei dem der Kolben als dünnwandiger Hohlkolben ausgebildet ist und die zum Luftfederinnenraum geöffnet ausgebildeten Vertiefung /Kavität (12) im Kolbendeckel (7) eingezogen ist.

5. Abrollkolben nach einem der Ansprüche 1 bis 3, bei dem der Spannring (17) ein an seinem Umfang geschlitzter Stahlring ist.

## Claims

1. Rolling piston (1) for an air spring rolling bellows (2), wherein the rolling piston is equipped with a conical sealing seat (4), which narrows toward the interior space (3) of the air spring, for receiving, in air-tight fashion, that end (5) of the air spring rolling bellows (2) which is assigned to the rolling piston, wherein the air spring rolling bellows (2) is equipped, at its end (5) assigned to the rolling piston, with a rolling bellows bead (8) which comprises a core (7) and which, in terms of its cross section, is likewise of cone-shaped form in an inward direction, that is to say towards the air spring interior space, and forms an opening of complementary design with respect to the conical sealing seat (4) of the rolling bellows, which opening is pressed onto the conical sealing seat of the rolling piston, **characterized in that** the conical sealing seat (4) is arranged on the inner side (10), facing towards the air spring interior space, of the inner limb (11) of a depression/cavity (12) which is formed in the head region of the rolling piston (1) and so as to be open toward the air spring interior space, wherein the air spring rolling bellows
- bears sealingly with its cone-shaped cross section against the conical sealing seat (4), and
- bears and is supported with its outer side (13), situated opposite the cone-shaped cross section, against the inner side (14), facing towards the air spring interior space, of the outer limb (15) of the depression (12),
and wherein the conical sealing seat (4) has, above the contact surface of the air spring rolling bellows, an encircling groove (16) in which there is placed a clamping ring (17) for axially fixing the rolling bellows bead.

2. Rolling piston according to Claim 1, in which the depression/cavity (12) which is open towards the air spring interior space is of trapezoidal form.

3. Rolling piston according to Claim 1 or 2, in which the air spring piston is of multi-part form and is composed of at least one pot-shaped lower part (6) and of a piston cover (7) connected to said lower part (6), and in which the depression/cavity (12) which is formed so as to be open towards the air spring interior space is formed within the piston cover (7).

4. Rolling piston according to one of Claims 1 to 3, in which the piston is formed as a thin-walled hollow piston, and the depression/cavity (12) which is formed so as to be open towards the air spring interior space is drawn in the piston cover (7).

5. Rolling piston according to one of Claims 1 to 3, in which the clamping ring (17) is a steel ring which is slotted on its circumference.

## Revendications

1. Piston à déroulement (1) pour un soufflet roulant de ressort pneumatique (2), le piston à déroulement étant pourvu d'un siège d'étanchéité conique (4) se rétrécissant vers l'espace interne (3) du ressort pneumatique, pour recevoir de manière étanche à l'air l'extrémité (5) du soufflet roulant de ressort pneumatique (2) associée au piston à déroulement, le soufflet roulant de ressort pneumatique (2) étant pourvu, au niveau de son extrémité (5) associée au piston à déroulement, d'un bourrelet de soufflet roulant (8) qui comprend un noyau (7) et qui est également formé dans sa section transversale sous forme conique vers l'intérieur, c'est-à-dire vers l'espace interne du ressort pneumatique et constitue une ouverture réalisée de manière complémentaire au siège d'étanchéité conique (4) du soufflet roulant, laquelle est pressée sur le siège d'étanchéité conique du piston à déroulement, **caractérisé en ce que** le siège d'étanchéité conique (4) est disposé sur le côté intérieur (10), tourné vers l'espace interne du ressort pneumatique, de la branche intérieure (11) d'un renfoncement / d'une cavité (12) réalisé(e) sous forme ouverte dans la région de tête du piston à déroulement (1) et vers l'espace interne du ressort pneumatique, le soufflet roulant de ressort pneumatique
- s'appliquant hermétiquement avec sa section transversale de forme conique contre le siège d'étanchéité conique (4) et
- s'appliquant et étant supporté avec son côté extérieur (13) opposé à la section transversale de forme conique contre le côté intérieur (14), tourné vers l'espace interne du ressort pneumatique, de la branche extérieure (15) du renfoncement (12), et le siège d'étanchéité conique (4) présentant, au-dessus de la surface d'appui du soufflet roulant de ressort pneumatique, une rainure périphérique (16) dans laquelle est introduite une bague de serrage (17) pour la fixation axiale du bourrelet de soufflet roulant.

2. Piston à déroulement selon la revendication 1, dans lequel le renfoncement/la cavité (12) ouvert(e) vers l'espace interne du ressort pneumatique est réalisé(e) sous forme trapézoïdale.

3. Piston à déroulement selon la revendication 1 ou 2, dans lequel le piston de ressort pneumatique est réalisé en plusieurs parties et se compose d'au moins une partie inférieure en forme de pot (6) et d'un couvercle de piston (7) raccordé à celle-ci et dans lequel le renfoncement/la cavité (12) réalisé(e) sous forme ouverte vers l'espace interne du ressort pneumatique est réalisé(e) à l'intérieur du couvercle de piston (7).

4. Piston à déroulement selon l'une quelconque des revendications 1 à 3, dans lequel le piston est réalisé sous forme de piston creux à parois minces et le renfoncement/la cavité (12) réalisé(e) sous forme ouverte vers l'espace interne du ressort pneumatique est rentré(e) dans le couvercle de piston (7).

5. Piston à déroulement selon l'une quelconque des revendications 1 à 3, dans lequel la bague de serrage (17) est une bague en acier fendue sur sa périphérie.
